# EUROPÄISCHE PATENTSCHRIFT

(11) **EP 3 041 970 B1**
(45) Veröffentlichungstag und Bekanntmachung des Hinweises auf die Patenterteilung: **24.04.2019**
(21) Anmeldenummer: 14747521.4
(22) Anmeldetag: 31.07.2014
(51) Int. Cl.: C23C 4/02, C23C 4/131, F16J 10/04, C22F 1/04, C21D 7/08

(54) **VERFAHREN ZUM BEARBEITEN EINER ZYLINDERWAND EINES VERBRENNUNGSMOTORS**
METHOD OF TREATING A CYLINDER WALL OF AN INTERNAL COMBUSTION ENGINE
PROCÉDÉ DE TRAITEMENT D'UNE PAROI DE CYLINDRE D'UN MOTEUR À COMBUSTION INTERNE

(30) Priorität: 05.09.2013 DE 102013014844
(43) Veröffentlichungstag der Anmeldung: 13.07.2016
(73) Patentinhaber: Bayerische Motoren Werke Aktiengesellschaft, 80809 München (DE); Technische Universität München, 80333 München (DE)
(72) Erfinder: BAUER, Alois, 84098 Hohenthann (DE); WAGENER, Wolfram, 84144 Geisenhausen (DE); WOISETSCHLAEGER, Patrick, 84028 Landshut (DE)
(74) Vertreter: Zeitler Volpert Kandlbinder Patent- und Rechtsanwälte Partnerschaft mbB
(86) Internationale Anmeldenummer: PCT/EP2014/002114
(87) Internationale Veröffentlichungsnummer: WO 2015/032461

(56) Entgegenhaltungen:
- EP-A1- 2 246 457
- EP-A2- 2 267 178
- WO-A1-2012/095215
- DE-A1-102009 030 683

## Beschreibung

Die Erfindung betrifft ein Verfahren zum Bearbeiten einer Wand eines Zylinders eines Verbrennungsmotors. Insbesondere betrifft die Erfindung ein Verfahren zum Beschichten der Zylinderwand, wobei diese zuvor aufgeraut wird, um die Haftung der Beschichtung zu verbessern.

Verbrennungsmotoren in Kraftfahrzeugen werden aus Gewichtsgründen regelmäßig mit einem Zylinderkurbelgehäuse aus Leichtmetall, insbesondere Aluminium, ausgebildet. Problematisch daran ist jedoch, dass die Innenwände der von dem Zylinderkurbelgehäuse ausgebildeten Zylinder wegen der tribologischen Eigenschaften des Leichtmetalls, insbesondere der vergleichsweise schlechten Verschleißfestigkeit, nur unzureichend als Laufflächen für die Kolben geeignet sind.

Um diese Problematik zu vermeiden, werden in vielen Verbrennungsmotoren mit einem Zylinderkurbelgehäuse aus Leichtmetall Laufbuchsen aus beispielsweise Grauguss eingesetzt, wodurch die Vorteile des Leichtmetalls (geringes spezifisches Gewicht) mit denjenigen des Graugusses (gute tribologische Eigenschaften) kombiniert werden können.

Alternativ dazu ist es bekannt, die Zylinderwände des Leichtmetall-Zylinderkurbelgehäuses mit einer Beschichtung zu versehen, um die gewünschten tribologischen Eigenschaften für die Laufflächen zu realisieren. Die Beschichtung wird dabei regelmäßig durch Aufschmelzen des Beschichtungswerkstoffs und Von besonderer Bedeutung bei der Beschichtung von Zylinderwänden ist, eine gute Haftung der Beschichtung auf dem Grundwerkstoff zu realisieren. Hierzu ist es bekannt, die Zylinderwände des Zylinderkurbelgehäuses vor dem Beschichten aufzurauen, um die Kontaktfläche zwischen den Schichten zu erhöhen. Vielfach wird dabei auch versucht, Hinterschnitte in den aufgerauten Zylinderwänden auszubilden, in die der aufgeschmolzene Beschichtungswerkstoff eindringen kann, um nach dem Aushärten eine form- und kraftschlüssige Verbindung mit den Zylinderwänden zu realisieren.

Verschiedene Möglichkeiten zum Aufrauen der Zylinderwände sind bekannt.

Hierunter fallen zum einen die mit "Hochdruckstrahlen" bezeichneten Verfahren, bei denen die Zylinderwände mittels Festpartikeln oder Flüssigkeit unter hohem Druck bestrahlt werden. Dadurch werden Partikel des Wandmaterials herausgebrochen und das Wandmaterial punktuell plastisch deformiert. Verbreitet sind insbesondere ein Bestrahlen mit Korund, das mittels eines Gasstrahl ausgebracht wird, sowie ein Bestrahlen mit Wasser oder einer Emulsion. Dabei werden der Gasstrahl oder die Flüssigkeit unter einem sehr hohen Druck von regelmäßig 1500 bar bis 3500 bar aus den dazu eingesetzten Düsen ausgebracht. Nachteilig an dem Hochdruckstrahlen ist der schnelle Verschleiß der Düsen infolge des hohen Drucks, gegebenenfalls in Verbindung mit dem Austrag eines abrasiven Materials. Zudem ist das Einhalten von Form- und Lagetoleranzen schwierig und daher mit einem erheblichen Aufwand verbunden. Und schließlich ist ein hoher Verbrauch des eingesetzten Mediums zu verzeichnen, was teilweise auch mit einem erheblichen Wiederaufbereitungsaufwand verbunden sein kann.

Weiterhin ist es bekannt, die Zylinderwände mechanisch aufzurauen. Dies kann beispielsweise durch Raudrehen erfolgen, bei denen in einem span enden oder spanlosen Prozess mittels eines oder mehrerer Werkzeuge Nuten oder Rillen in die Zylinderwände eingebracht werden.

So ist beispielsweise aus der DE 10 2009 027 200 B3 bekannt, in einem ersten Verfahrensschritt zum Aufrauen einer Zylinderwand eine spiralförmige Nut mit insbesondere rechteckigem oder trapezförmigem Querschnitt in die Zylinderwand einzubringen. Dies kann sowohl spanend als auch spanlos erfolgen. In einem zweiten Schritt wird daraufhin der zwischen der Nut spiralförmig verlaufende Steg abschnittsweise radial plastisch verformt, um Hinterschnitte auszubilden. Zum Einbringen der Nut wird ein Werkzeug eingesetzt, das eine einzelne Schneide aufweist, wobei das Werkzeug sowohl rotierend angetrieben als auch axial entlang der Längsachse des Zylinders verfahren wird.

Als nachteilig an den bekannten mechanischen Verfahren kann sich eine vergleichsweise große Kerbwirkung des eingebrachten Profils zeigen, die sich insbesondere bei einer spanenden Bearbeitung aufgrund des dann scharfkantigen Nutprofils einstellt. Weiterhin können die Werkzeuge regelmäßig die En den d er Zylinder nicht vollständig bearbeiten. Und schließlich ist bei den mechanischen Verfahren in der Regel erforderlich, die bearbeiteten Zylinderwände anschließend zu reinigen, um Bearbeitungsrückstände zu beseitigen und öl- und schmutzfreie Oberflächen, die für eine qualitativ hochwertige Beschichtung erforderlich sind, zu erhalten.

Alternative Verfahren zur Vorbereitung von Zylinderwänden für eine nachfolgende Beschichtung sind das chemische sowie das elektrische Aufrauen, das Bürsten sowie das Haftgrundspritzen.

Die Druckschrift WO 2012/095215 A1 beschreibt ein Verfahren zum Aufrauen und thermischen Beschichten einer Zylinderlauffläche einer Brennkraftmaschine, bei dem ein Grundprofil in Trapezform und ein Unterprofil in eine Wand eingebracht werden, wobei das Grundprofil und/oder das Unterprofil weiter verformt werden können.

Die Druckschrift DE 10 2009 030 683 A1 beschreibt ein Verfahren zum Herstellen eines Zylinderkurbelgehäuses, bei dem die Zylinderlauffläche verdichtet und anschließend aufgeraut wird.

Ausgehend von diesem Stand der Technik lag der Erfindung die Aufgabe zugrunde, die Qualität der Verankerung einer Beschichtungsschicht auf einer Zylinderwand zu verbessern.

Diese Aufgabe wird durch ein Verfahren gemäß dem unabhängigen Patentanspruch 1 gelöst. Vorteilhafte Ausgestaltungen des erfindungsgemäßen Verfahrens sind Gegenstand der abhängigen Patentansprüche und ergeben sich aus der nachfolgenden Beschreibung der Erfindung.

Ein gattungsgemäßes Verfahren zum Bearbeiten (mindestens) einer Wand (mindestens) eines Zylinders eines Verbrennungsmotors, weist die Schritte in der folgenden Reihenfolge auf: a) Einbringen einer spiralförmigen Nut (2) mittels eines Schneidwerkzeugs (3) in die Wand (1), wobei das Schneidwerkzeug (3) zwei schräg zueinander ausgerichtete Schneiden (4) aufweist, wobei die Schneiden (4) bei einem zwischen zwei Nutabschnitten ausgebildeten Steg (5) beidseitig einen Hinterschnitt bezüglich der radialen Richtung des Zylinders (8) ausbilden, und b) Bestrahlen der Wand (1) mit einem Medium unter Hochdruck, um Mikrovertiefungen einzubringen.

Dabei wird unter "mechanischer Bearbeitung" ein Prozess verstanden, bei dem mittels mindestens eines von einer Bearbeitungsmaschine geführten Werkzeugs durch direkten Kontakt Vertiefungen in spanender oder spanloser (d.h. durch plastische Deformation) Weise in die Wand des Zylinders eingebracht werden.

Unter "Mikrovertiefungen" werden Vertiefungen verstanden, die kleiner als die im Rahmen der mechanischen Bearbeitung eingebrachten Vertiefungen sind und deren Abmessungen insbesondere nur einem (größerzahligen) Bruchteil der entsprechenden Abmessungen der Vertiefungen entsprechen.

Durch die erfindungsgemäße Kombination einer mechanischen Bearbeitung und einer Bestrahlung unter Hochdruck kann sich insbesondere die Qualität der Verankerung einer vorzugsweise nachträglich auf die bearbeitete Wand aufgebrachten Beschichtung verbessern. Dies liegt an der Kombination aus relativ großen, mit Hinterschnitten versehenen Vertiefungen als Resultat der mechanischen Bearbeitung mit der Vielzahl an relativ kleinen Mikrovertiefungen, die durch das Bestrahlen erzeugt werden. Insgesamt kann eine deutlich gegenüber den bekannten Verfahren gesteigerte Oberflächenvergrößerung der bearbeiteten Wand sowie eine gesteigerte Dichte der Verzahnungseingriffe zwischen der bearbeiteten Wand und der Beschichtungsschicht realisiert werden. Ein weiterer Vorteil des erfindungsgemäßen Verfahrens kann darin liegen, dass das nachträgliche Bestrahlen der zuvor mechanisch bearbeiteten Wand ein Reinigen, das bei konventionellem mechanischen Aufrauen regelmäßig erforderlich ist, überflüssig machen kann.

In einer bevorzugten Ausführungsform des erfindungsgemäßen Verfahrens kann vorgesehen sein, dass das Bestrahlen, für das vorzugsweise eine Flüssigkeit (z.B. Wasser oder eine Emulsion) verwendet wird, mit einem Druck ≤ 1500 bar und besonders bevorzugt mit einem Druck zwischen 500 bar und 1500 bar erfolgt. Dadurch kann sichergestellt werden, dass in ausreichendem Maße Mikrovertiefungen in die Wand eingebracht werden können und ein Abtragen von Verunreinigungen, die insbesondere aus dem vorangegangenen mechanischen Bearbeitungsschritt stammen können, erfolgen kann. Gleichzeitig kann sichergestellt werden, dass die durch das mechanische Bearbeiten geschaffene Struktur im Wesentlichen erhalten bleibt und nicht durch ein Bestrahlen unter zu hohem Druck abgetragen oder abgeflacht wird. Infolge des gegenüber den bekannten, als "Hochdruckstrahlen" bezeichneten Verfahren deutlich reduzierten Drucks stellt die Einhaltung von Form- und Lagetoleranzen bei dem erfindungsgemäßen Bestrahlen regelmäßig kein Problem dar.

Das erfindungsgemäße Bearbeiten der Zylinderwand kann insbesondere dazu dienen, eine gute Haftung einer nachträglich auf die Zylinderwand aufgebrachten Beschichtungsschicht, die als Lauffläche des Zylinders dient, zu realisieren. Das erfindungsgemäße Verfahren kann demnach in einem abschließenden Verfahrensschritt ein Beschichten der Zylinderwand umfassen. Dieses Beschichten kann auf beliebige im Stand der Technik bekannte Art und Weise erfolgen, wobei vorzugsweise ein thermisches Spritzverfahren, bei dem der Beschichtungswerkstoff im aufgeschmolzenen Zustand auf die Zylinderwand aufgespritzt wird und dort aushärtet, zum Einsatz kommen kann. Beispiele für thermische Spritzverfahren sind das Lichtbogendrahtspritzen und das Plasmabeschichten.

Dabei wird unter "abschließend" verstanden, dass das Beschichten als letzter der in den verschiedenen Ausführungsformen als zur Erfindung gehörend beanspruchten Verfahrensschritte durchgeführt wird. Dies soll nicht ausschließen, dass nach dem Beschichten noch andere Bearbeitungen der dann beschichteten Zylinderwand vorgenommen werden.

In einer bevorzugten Ausgestaltung des erfindungsgemäßen Verfahrens kann vorgesehen sein, dass Vertiefungen in Form von einer oder mehreren umlaufenden Nuten eingebracht werden. Dadurch kann eine Homogenität bzw. Symmetrie in der Struktur der bearbeiteten Wand erzielt werden, die zu einer entsprechenden Homogenität in der Verankerung einer abschließend aufgebrachten Beschichtung und folglich zu einer hohen Beschichtungsqualität führen kann. Zudem kann das Einbringen von umlaufenden Nuten im Rahmen der mechanischen Bearbeitung relativ einfach und somit kostengünstig erfolgen. Bei einer solchen Ausführungsform des erfindungsgemäßen Verfahrens kann das nachträgliche Bestrahlen zudem den Vorteil aufweisen, dass die Kanten und Ecken der Nuten abgerundet werden, wodurch die Kerbwirkung, die diese haben können, abgeschwächt werden.

Um die Haftung einer Beschichtung auf der Zylinderwand weiter zu verbessern, kann zudem vorgesehen sein, dass der oder die zwischen der oder den Nuten ausgebildeten Stege vor dem Beschichten derart umgeformt werden, dass diese (bezüglich der radialen Richtung, ausgehend von der Längsachse des Zylinders) Hinterschnitte ausbilden. Dadurch wird ein Verzahnen der Beschichtungsschicht in der bearbeiteten Zylinderwand erreicht, die einer formschlüssigen Verbindung gleichkommen kann. Zudem kann durch das plastische Verformen der Stege eine Verdichtung des Materials in den Stegen erzielt werden, was erneut einer Verbesserung der Haftung zwischen der Beschichtung und der Zylinderwand zugute kommen kann. Dabei kann das nachträgliche Bestrahlen der Wand zudem dazu führen, das die Übergänge von den Nutflanken in die Nutgründe "ausgewaschen" werden, wodurch sich die von den Stegen ausgebildeten Hinterschnitte gegebenenfalls vergrößern.

Besonders bevorzugt kann das Umformen der Stege noch vor dem Bestrahlen erfolgen. Anderenfalls könnte dies dazu führen, dass die durch das Bestrahlen eingebrachten Mikrovertiefungen beim Umformen wieder geglättet werden.

Die Erfindung wird nachfolgend anhand eines in den Zeichnungen dargestellten Ausführungsbeispiels näher erläutert. Die Zeichnungen zeigen in:
- Fig. 1:: das Einbringen einer spiralförmigen Nut in eine Zylinderwand als ein erster Schritt eines erfindungsgemäßen Verfahrens zum Beschichten der Zylinderwand;
- Fig. 2:: ein zur Erläuterung dienendes Verfahren zur Erzeugung eines Profils mit Hinterschnitt;
- Fig. 3:: ein Bestrahlen der Zylinderwand als ein zweiter Schritt des Verfahrens zum Beschichten der Zylinderwand;
- Fig. 4:: eine zu der Fig. 3 alternative Vorgehensweise bei einer Bestrahlung der Zylinderwand;
- Fig. 5:: eine weitere, zu der Fig. 3 alternative Vorgehensweise bei einer Bestrahlung der Zylinderwand; und
- Fig. 6:: ein Aufbringen einer Beschichtungsschicht auf die zuvor bearbeitete Zylinderwand als ein dritter Schritt des Verfahrens zum Beschichten der Zylinderwand;

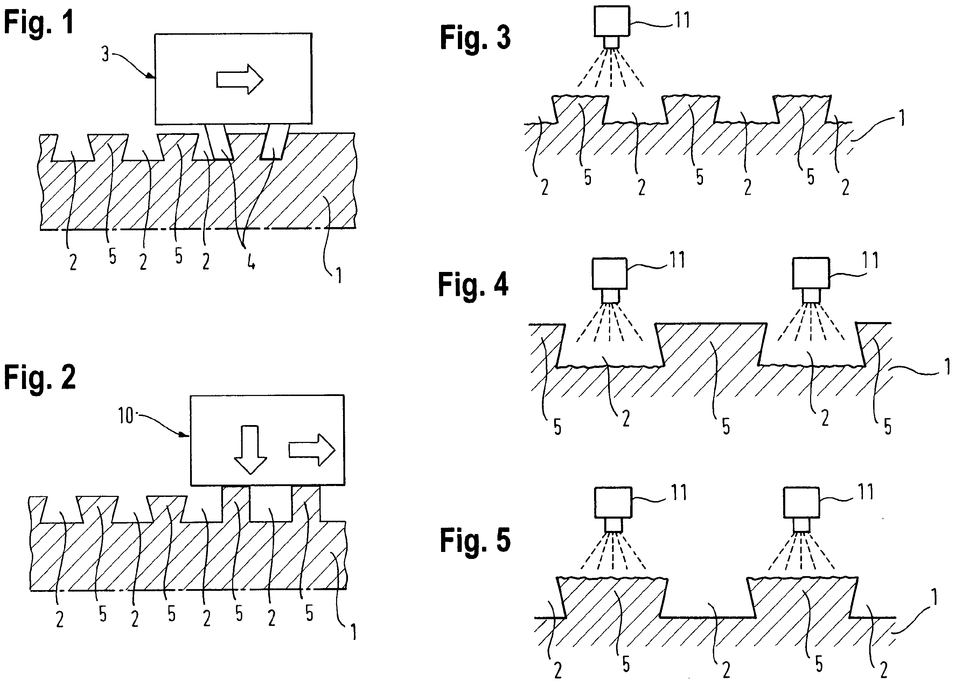

Die Fig. 1 bis 6 zeigen in schematischen Darstellungen verschiedene Schritte eines Verfahrens zum Beschichten einer (Zylinder-)Wand 1 eines von einem Zylinderkurbelgehäuse 7 ausgebildeten Zylinders 8 sowie die dabei eingesetzten Vorrichtungen.

In einem ersten Schritt des erfindungsgemäßen Verfahrens werden in die Zylinderwand 1 eine Vielzahl von umlaufenden, parallel angeordneten Nut(abschnitt)en 2 spanend eingebracht.

Die Fig. 1 zeigt das erfindungsgemäße Einbringen einer spiralförmigen Nut 2 mittels eines Schneidwerkzeugs 3, das zwei schräg zueinander ausgerichtete Schneiden 4 aufweist. Infolge der Schrägstellung der beiden Schneiden 4 weisen die zwischen jeweils zwei Nutabschnitten der Nut 2 ausgebildeten Abschnitte eines Stegs 5 einen trapezförmigen Querschnitt auf. Dadurch bilden diese beidseitig einen Hinterschnitt bezüglich der radialen Richtung des Zylinders 8 aus. Mittels der Hinterschnitte der Stegabschnitte 5, die eine zylinderseitige Verengung der Nutabschnitte 2 darstellen, kann eine formschlüssige Fixierung einer nachträglich aufzubringenden Beschichtungsschicht 6 auf der Zylinderwand 1 erreicht werden. Das Einbringen der Nut 2 erfolgt kontinuierlich, indem das Schneidwerkzeug 3 den Schnitt in die Zylinderwand 1 an einem der längsaxialen Enden des Zylinders 8 beginnt und in einer Kombination aus einer Drehbewegung um die Längsachse 9 des Zylinders 8 und einem längsaxialen Vorschub (vgl. Pfeil in Fig. 1) bewegt wird. Dadurch ergibt sich der spiralförmige Verlauf der Nut 2.

Die Fig. 2 zeigt eine zur Erläuterung dienende Möglichkeit, zylinderseitig verengte Nut(abschnitt)e(n) in die Zylinderwand einzubringen. Dort ist in einem (nicht dargestellten) ersten Schritt vorgesehen, eine oder mehrere Nuten 2 mit zunächst im Wesentlichen parallelen Nutwänden in die Zylinderwand 1 spanend einzubringen. Dass kann wiederum kontinuierlich mit einem dann spiralförmigen Nutverlauf einer einzelnen Nut 2 erfolgen. Möglich ist aber ein diskontinuierliches Einbringen von mehreren, parallel ausgerichteten und in sich geschlossenen Nuten 2, indem ein (nicht dargestelltes) Schneidwerkzeug nacheinander an definierten längsaxialen Positionen des Zylinders 8 positioniert und dann in einer Drehbewegung um die Längsachse 9 des Zylinders 8 rotierend angetrieben und bis zum Erreichen der gewünschten Nuttiefe in radialer Richtung verschoben wird. Anschließend werden die zwischen den Nut(abschnitt)e(n) 2 ausgebildeten Steg(abschnitt)e 5 plastisch umgeformt, um die Hinterschnitte beziehungsweise Verengungen der Nutquerschnitte auszubilden. Zum Umformen wird ein Umformwerkzeug 10 eingesetzt. Das rotierend angetriebene Umformwerkzeug 10 wird entlang der Längsachse 9 des Zylinders 8 verfahren und gleichzeitig eine Umformkraft in radialer Richtung auf die Steg(abschnitt)e 5 aufgebracht (vgl. Pfeile in Fig. 2).

Nach der mechanischen Bearbeitung der Steg(abschnitt)e 5 ist vorgesehen, die Zylinderwand 1 zu bestrahlen. Dies ist in einer ersten Ausführungsform in der Fig. 3 dargestellt. Dazu wird mittels einer Düse 11, die beispielsweise als konventionelle Rundstrahldüse oder Flachstrahldüse ausgebildet sein kann, ein Medium, beispielsweise Wasser, unter Hochdruck auf die Zylinderwand 1 aufgebracht. Dadurch werden ungleichförmig ausgebildete und angeordnete Mikrovertiefungen in die mit Nut(abschnitt)en 2 versehen e Zylinderwand 1 eingebracht, die zu einer Verbesserung der Haftung der abschließend auf die bearbeitete Zylinderwand 1 aufgebrachten Beschichtungsschicht 6 führen kann. Zudem kann das Bestrahlen zu einer Abrundung und Auswaschung der zuvor spitzen Kanten und Ecken der Nut(abschnitt)e(n) 2 beziehungsweise Steg(abschnitt)e 5 führen. Dadurch kann deren Kerbwirkung (die sich insbesondere in der dazu negativen Form der Beschichtungsschicht 6 bemerkbar machen kann) reduziert werden.

Das Bestrahlen der zuvor mechanisch bearbeiteten Zylinderwand 1 kann vollflächig (vgl. Fig. 3) oder auch nur teilweise erfolgen. In der Fig. 4 ist beispielhaft dargestellt, dass nur der oder die Nutgründe bestrahlt werden, während in der Fig. 5 dargestellt ist, dass nur die Steg(abschnitt)e 5 bestrahlt werden.

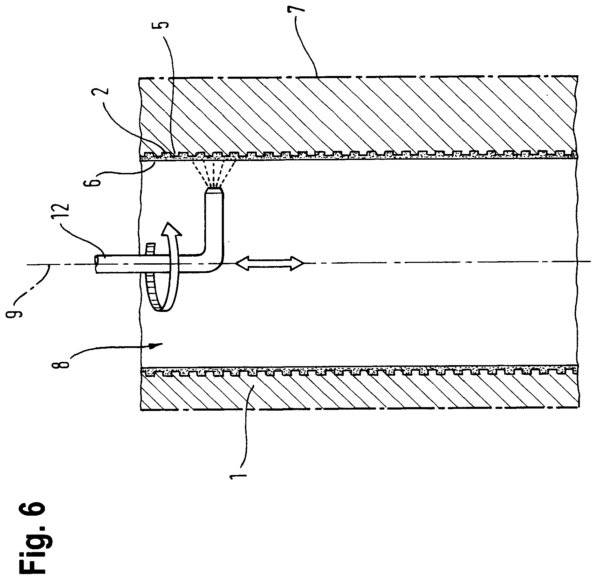

Abschließend wird die Beschichtungsschicht 6 auf die bearbeitete Zylinderwand 1 aufgebracht (vgl. Fig. 6). Diese dient als Lauffläche für einen in dem Zylinder 8 geführten Kolben (nicht dargestellt) des Verbrennungsmotors. Die Beschichtung kann insbesondere mittels thermischen Spritzens (z.B. Lichtbogendrahtspritzen) aufgebracht werden, wozu in bekannter Weise ein Spritzkopf 12 rotierend angetrieben und entlang der Längsachse 9 des Zylinders 8 verfahren wird. Das aufgeschmolzene Beschichtungsmaterial kann dabei in die Nut(en) 3 eindringen, diese ausfüllen und - nach dem Aushärten - die gewünschte formschlüssige Verbindung der Beschichtungsschicht 6 mit der Zylinderwand 1 ausbilden.

Sofern das Zylinderkurbelgehäuse 7 mehr als einen Zylinder 8 aufweist, kann vorgesehen sein, mehrere und insbesondere alle Zylinder 8 gleichzeitig erfindungsgemäß zu bearbeiten.

## Patentansprüche

1. Verfahren zum Bearbeiten einer Wand (1) eines Zylinders (8) eines Verbrennungsmotors, mit den Schritten in der folgenden Reihenfolge:
a) Einbringen einer spiralförmigen Nut (2) mittels eines Schneidwerkzeugs (3) in die Wand (1), wobei das Schneidwerkzeug (3) zwei schräg zueinander ausgerichtete Schneiden (4) aufweist, wobei die Schneiden (4) bei einem zwischen zwei Nutabschnitten ausgebildeten Steg (5) beidseitig einen Hinterschnitt bezüglich der radialen Richtung des Zylinders (8) ausbilden, und
b) Bestrahlen der Wand (1) mit einem Medium unter Hochdruck, um Mikrovertiefungen einzubringen.

2. Verfahren gemäß Anspruch 1, **dadurch gekennzeichnet, dass** mehrere umlaufende Nuten (2) in die Wand (1) eingebracht werden.

3. Verfahren gemäß Anspruch 1 oder 2, **dadurch gekennzeichnet, dass** das Bestrahlen mit einer Flüssigkeit erfolgt.

4. Verfahren gemäß einem der vorhergehenden Ansprüche, **dadurch gekennzeichnet, dass** das Bestrahlen mit einem Druck ≤ 1500 bar erfolgt.

5. Verfahren gemäß Anspruch 4, **dadurch gekennzeichnet, dass** das Bestrahlen mit einem Druck zwischen 500 bar und 1500 bar erfolgt.

6. Verfahren gemäß einem der vorhergehenden Ansprüche, **dadurch gekennzeichnet, dass** die Wand (1) abschließend beschichtet wird.

## Claims

1. Method for machining a wall (1) of a cylinder (8) of an internal combustion engine comprising the steps, in the following sequence:
a) introducing a spiral groove (2) in the wall (1) by means of a cutting tool (3), wherein the cutting tool (3) has two blades (4) oriented obliquely to one another, wherein the blades (4) create an undercut in relation to the radial direction of the cylinder (8), on both sides, in a web (5) formed between two groove sections, and
b) blasting the wall (1) with a medium under high pressure in order to introduce microdepressions.

2. Method according to claim 1, **characterised in that** several circumferential grooves (2) are introduced into the wall.

3. Method according to claim 1 or 2, **characterised in that** the blasting is carried out with a liquid.

4. Method according to one of the preceding claims, **characterised in that** the blasting is carried out with a pressure ≤ 1500 bar.

5. Method according to claim 4, **characterised in that** the blasting is carried out with a pressure between 500 bar and 1500 bar.

6. Method according to one of the preceding claims, **characterised in that** the wall (1) is finally coated.

## Revendications

1. Procédé de traitement d'une paroi (1) d'un cylindre (8) d'un moteur à combustion interne, comprenant dans l'ordre suivant les étapes consistant à :
a) ménager une gorge spiralée (2) dans la paroi (1) au moyen d'un outil de coupe (3), l'outil de coupe (3) comprenant deux tranchants (4) orientés en oblique l'un par rapport à l'autre, les tranchants (4) formant, pour une âme (5) réalisée entre deux portions de gorge, de part et d'autre une contre-dépouille par rapport à la direction radiale du cylindre (8),
et
b) projeter un milieu sous haute pression sur la paroi (1) pour ménager des microcavités.

2. Procédé selon la revendication 1, **caractérisé en ce que** plusieurs gorges périphériques (2) sont ménagees dans la paroi (1).

3. Procédé selon la revendication 1 ou 2, **caractérisé en ce que** la projection s'effectue avec un liquide.

4. Procédé selon l'une des revendications précédentes, **caractérisé en ce que** la projection s'effectue à une pression ≤ 1500 bars.

5. Procédé selon la revendication 4, **caractérisé en ce que** la projection s'effectue à une pression entre 500 bars et 1500 bars.

6. Procédé selon l'une des revendications précédentes, **caractérisé en ce que** la paroi (1) est ensuite revêtue.
